(19) Europäisches Patentamt
European Patent Office
Office européen des brevets

(11) EP 4 221 299 A1

(12) EUROPEAN PATENT APPLICATION
published in accordance with Art. 153(4) EPC

(43) Date of publication:
02.08.2023 Bulletin 2023/31

(51) International Patent Classification (IPC):
H04W 16/18 (2009.01)

(21) Application number: 21871137.2

(22) Date of filing: 13.08.2021

(52) Cooperative Patent Classification (CPC):
H04W 16/18; H04W 24/10; H04W 48/16

(86) International application number:
PCT/CN2021/112633

(87) International publication number:
WO 2022/062764 (31.03.2022 Gazette 2022/13)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 23.09.2020 CN 202011008211

(71) Applicant: ZTE Corporation
Shenzhen, Guangdong 518057 (CN)

(72) Inventors:
• LIU, Xiao
Shenzhen, Guangdong 518057 (CN)
• LV, Shasha
Shenzhen, Guangdong 518057 (CN)

(74) Representative: Boult Wade Tennant LLP
Salisbury Square House
8 Salisbury Square
London EC4Y 8AP (GB)

(54) CONFIGURATION METHOD AND CONFIGURATION APPARATUS FOR UNKNOWN NEIGHBOR CELL, AND ELECTRONIC DEVICE

(57) The present application relates to a configuration method and a configuration apparatus for an unknown neighbor cell. The configuration method comprises: receiving a PCI and a frequency point of an unknown neighbor cell that are reported by a UE terminal; searching the entire network for every cell where both the PCI and frequency point are the same as those of the unknown neighbor cell, so as to obtain a cell set; determining a longitude and latitude range of a search region of the unknown neighbor cell; filtering one or more cells from the cell set that are located in the search region of the unknown neighbor cell, so as to obtain a filtered cell set; calculating a distance between each cell in the filtered cell set and a central point; and taking the cell closest to the central point as a final neighbor cell of a serving cell, and adding neighbor cell information of the final neighbor cell to a neighbor cell list.

FIG.1

**Description**

**CROSS REFERENCE**

The present application is based on the Chinese Patent Application No. 202011008211.1 fild on September 23, 2020, and claims the priority of the Chinese Patent Application, the entire content of which is incorporated herein by reference.

**TECHNICAL FIELD**

The present application relates to the technical field of radio communication, and specifically to a configuration method and a configuration apparatus for an unknown neighbor cell.

**BACKGROUND**

With the continuous development of wireless networks, people have higher and higher requirements for network performance, such as higher quality, faster speed and higher definition of video calls. Due to the fact that an UE (User Equipment) terminal does not support CGI (Cell Global Identifier) measurement at present, when the UE terminal identifies an unknown NR (New Radio) neighbor cell, the neighbor cell cannot be added to a neighbor cell list since the CGI of the neighbor cell is not available, resulting in the failure of the UE terminal switching cells, which ultimately affects normal use of the user.

At the same time, in the current NSA or SA networking scenario, adding 5G neighbor cells to 4G/5G cells is conducted in a single work approach, and the workload of manually optimizing neighbor cells is large, which is relatively cumbersome. In addition, there are many situations such as misallocation and unreasonable configuration, resulting in low switching success rate of neighbor cells. Therefore, it is urgently needed to identify the CGI of the unknown neighbor cell by a MR (Measurement Report) reported by the UE terminal, and then improve the efficiency of neighbor cell optimization in practical applications by an ANR (Automatic Neighbour Relation) function.

**SUMMARY**

The present application provides a configuration method for an unknown neighbor cell comprising:

receiving a PCI (physical cell identifier) and a frequency point of an unknown neighbor cell that are reported by a user equipment UE terminal;

searching the entire network for every cell where both the PCI and frequency point are the same as those of the unknown neighbor cell, so as to obtain a cell set;

determining a longitude and latitude range of a search region of the unknown neighbor cell;

filtering one or more cells from the cell set that are located in the search region of the unknown neighbor cell, so as to obtain a filtered cell set;

calculating a distance between each cell in the filtered cell set and a central point; and

taking the cell closest to the central point as a final neighbor cell of a serving cell, and adding neighbor cell information of the final neighbor cell to a neighbor cell list.

The present application provides a configuration apparatus for an unknown neighbor cell comprising:

a receiving module for receiving a PCI and a frequency point of an unknown neighbor cell that are reported by a UE terminal;

a searching module for searching the entire network for every cell where both the PCI and frequency point are the same as those of the unknown neighbor cell, so as to obtain a cell set;

a determining module for determining a longitude and latitude range of a search region of the unknown neighbor cell;

a filtering module for filtering one or more cells from the cell set that are located in the search region of the unknown neighbor cell, so as to obtain a filtered cell set;

a screening module for calculating a distance between each cell in the filtered cell set and a central point; and

a configuring module for taking the cell closest to the central point as a final neighbor cell of a serving cell, and adding neighbor cell information of the final neighbor cell to a neighbor cell list.

The present application provides an electronic device comprising:

at least one processor; and

a memory in communication with the at least one processor; wherein,

the memory stores instructions executable by the at least one processor, the instructions, when executed by the at least one processor, enable the at least one processor to implement the configuration method for an unknown neighbor cell as described above.

The present application provides a computer-readable storage medium having stored a computer program to be executed by a processor, the configuration method for an unknown neighbor cell as described above is implemented when the computer program is executed by the processor.

## BRIEF DESCRIPTION OF DRAWINGS

Fig. 1 is a flowchart of a configuration method for an unknown neighbor cell of the present application;

Fig. 2 is a schematic diagram of the search region of a location neighbor cell in an embodiment of the present application;

Fig. 3 is a block diagram of a configuration apparatus of the present application;

Fig. 4 is a schematic diagram of an electronic device provided in an embodiment of the present application.

## DETAILED DESCRIPTION

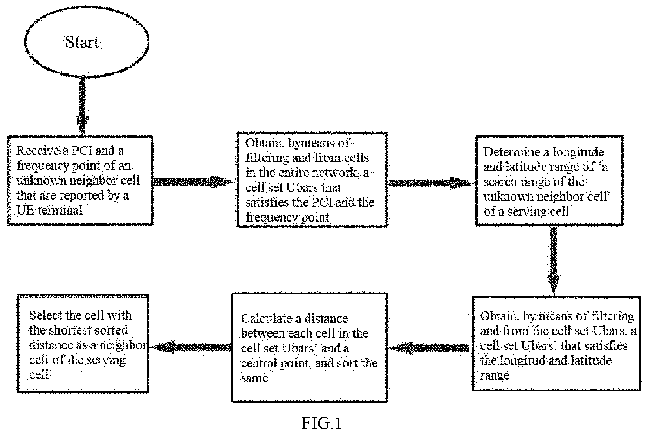

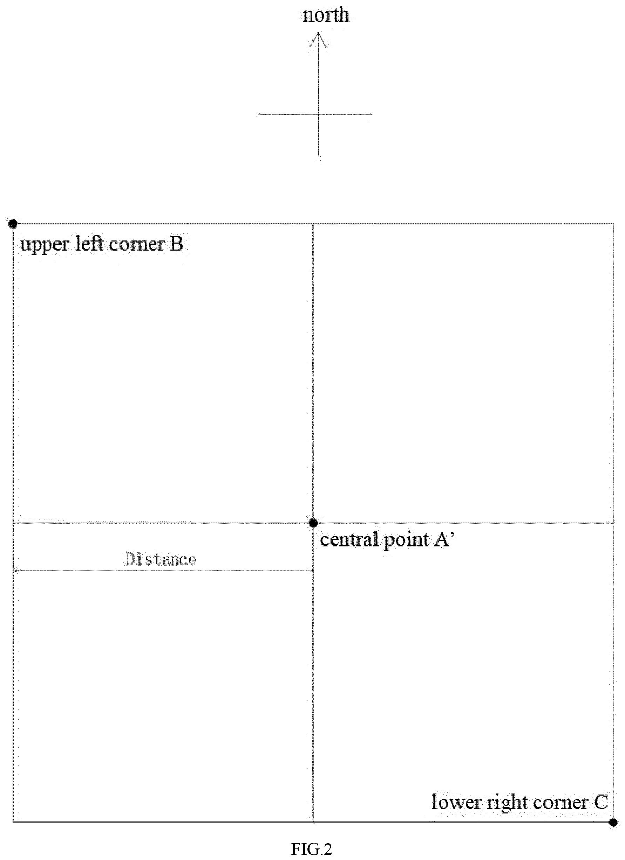

The technical solutions of the present application will be described clearly and completely in combination with the drawings. Obviously, the described embodiments are part of the embodiments of the present application, not all of them. Based on the embodiments of the present application, all other embodiments obtained by those ordinary skilled in the art without creative work fall within the protection scope of the present application.
In the description of the present application, it should be noted that the orientation or position relationship indicated by the terms "center", "up", "down", "left", "right", "vertical", "horizontal", "inside", "outside", etc. is based on the orientation or position relationship shown in the drawings, which is only for the convenience of describing the present application and simplifying the description, rather than indicating or implying that the apparatus or element referred to must have a specific orientation, be constructed and operated in a specific orientation, so it cannot be interpreted as a limitation of the present application. In addition, the terms "first", "second" and "third" are only used for descriptive purposes and cannot be interpreted as indicating or implying relative importance.
In the description of the present application, it should be noted that unless otherwise specified and limited, the terms "install", "connect to" and "connect" should be interpreted in a broad sense, for example, it can be fixed connection, removable connection, or integrated connection; it can be mechanical connection or electrical connection; it can be directly connected, or indirectly connected through intermediate media, or it can be the internal connection of two components. For those ordinary skilled in the art, the specific meaning of the above terms in the present application can be interpreted according to specific circumstances.
The present application is described with examples in combination with the drawings.
As shown in Figs. 1-2, an embodiment of the configuration method for an unknown neighbor cell of the present application comprises:

receiving a PCI and a frequency point of an unknown neighbor cell that are reported by a UE terminal;

searching the entire network for every cell where both the PCI and frequency point are the same as those of the unknown neighbor cell, so as to obtain a cell set;

determining a longitude and latitude range of a search region of the unknown neighbor cell;

filtering one or more cells from the cell set that are located in the search region of the unknown neighbor cell, so as to obtain a filtered cell set;

calculating a distance between each cell in the filtered cell set and a central point; and

taking the cell closest to the central point as a final neighbor cell of a serving cell, and adding neighbor cell information of the final neighbor cell to a neighbor cell list.

The present application invention has the following beneficial effects:
The wireless communication network system is a complex network, and whether the neighbor relationship between cells is configured correctly or not is related to the success rate of cell switching generated in the process of UE terminal movement, thus is related to the stability of the entire network. However, when the neighbor relationship is configured manually, it is inevitable that it is difficult, costly, and easy to misallocate, However, when the UE terminal can only detect the PCI frequency point CGI of the unknown neighbor cell, here a new method to determine an unknown neighbor cell is proposed, that is, determining unknown neighbor cell information based on the MR measurement of the UE terminal, which can solve the time-consuming problem and inaccuracy of manual configuration.

The present application provides a method of combining intelligence and user control. The user sets different distance parameters for different cell sizes to perform automatic identification of neighbor cells, and thus can control the effect of the readiness of identified neighbor cell to meet the requirements of different scenarios.

The present application can automatically complete the identification of unknown neighbor cells and automatically trigger the function of adding neighbor cells after the identification of neighbor cells in the initial stage of network deployment or in the process of network optimization, so as to improve the efficiency of operation and maintenance, reduce the investment in operation and maintenance, and improve the network performance.

In an embodiment, the specific manner for determining a longitude and latitude range of a search region of the unknown neighbor cell comprises:

determining a longitude and latitude information of the center point of a serving cell;

taking the longitude and latitude of the center point as the center, drawing a contour line with a distance parameter of a search range of the unknown neighbor cell as a boundary, so as to obtain longitude and latitude information of a search region of the unknown neighbor cell.

As a preferred embodiment of the configuration method for an unknown neighbor cell of the present application, the manner for determining the position of the central point comprises:
when the serving cell has no formal neighbor cell before receiving the PCI and frequency point of the unknown neighbor cell that are reported by the UE terminal, taking the serving cell as the center point;

Assuming that the serving cell is A, the longitude and latitude of the serving cell A is Coordinate A = (logA, latA); assuming that the longitude and latitude of the central point is Coordinate_Center = (logA', latA'); then logA' = logA; latA' = latA;
when the serving cell has one formal neighbor cell before receiving the PCI and frequency point of the unknown neighbor cell that are reported by the UE terminal, taking a midpoint of a connecting line between the serving cell and the formal neighbor cell as the center point;

Assuming that the serving cell is A, the central point is A', the longitude and latitude of the serving cell A is Coordinate_A = (logA, latA); assuming that the formal neighbor cell is A1, the longitude and latitude of the formal neighbor cell A1 is Coordinate_A1 = (logA1, latA1); the longitude and latitude of the central point A' is Coordinate_Center = (logA', latA'); then logA' = (logA+logA1) /2; latA' = (latA+latA1) /2;
when the serving cell has two formal neighbor cells before receiving the PCI and frequency point of the unknown neighbor cell that are reported by the UE terminal, taking gravity center of a triangle formed by the serving cell and the two formal neighbor cells as the center point;

Assuming that the serving cell is A, the central point is A', the longitude and latitude of the serving cell A is Coordinate_A = (logA, latA); assuming that the two formal neighbor cells are A1 and A2 respectively, the longitude and latitude of the formal neighbor cell A1 is Coordinate_A1 = (logA1, latA1), and the longitude and latitude of the formal neighbor cell A2 is Coordinate_A2 = (logA2, latA2); the longitude and latitude of the central point is Coordinate_Center = (logA', latA'); then logA' = (logA+logA1+logA2)/3; latA'= (latA+latA1+latA2) /3;

when the serving cell has N formal neighbor cells before receiving the PCI and frequency point of the unknown neighbor cell that are reported by the UE terminal, N>2, selecting the two closest formal neighbor cells to the serving cell, and taking a gravity center of a triangle formed by the serving cell and the two closest formal neighbor cells as the center point;

Assuming that the serving cell is A, the central point is A', the longitude and latitude of the serving cell A is Coordinate_A = (logA, latA); assuming that the two closest formal neighbor cells are A1 and A2 respectively, the longitude and latitude of the formal neighbor cell A1 is Coordinate_A1 = (logA1, latA1), and the longitude and latitude of the formal neighbor cell A2 is Coordinate_A2 = (logA2, latA2); the longitude and latitude of the central point is Coordinate_Center = (logA', latA'); then logA' = (logA+logA1+logA2)/3; latA' = (latA+latA1+latA2) /3.

As a preferred embodiment of the configuration method for an unknown neighbor cell of the present application, before taking the longitude and latitude of the center point as the center, drawing the contour line a the distance parameter of a search range of the unknown neighbor cell as a boundary, it is also needed to set a distance parameter "Distance" of a search range of the unknown neighbor cell.

In an embodiment, a search range "Distance" of the unknown neighbor cell is set based on deployment density of a base station, the distance parameter of the search region of the unknown neighbor cell is set to ensure that the serving cell can have at least one neighbor cell.

In an embodiment, the contour line is a square contour line, four sides of the square are parallel to the planes where the longitude line or latitude line locate respectively, and the distance parameter of the search region of the unknown neighbor cell refers to a distance from a center of the square contour line to a border.

In an embodiment, the longitude and latitude (logX, latX) of any corner on the square is calculated as follows:

Assuming that any corner on the square is angle X, the azimuth angle of angle X is "angle", and the longitude and latitude of the center point of the square is: Coordinate_ Center=(logA', latA'), the search range of the unknown neighbor cell is Distance, and the polar radius of the earth is Rj; The equatorial radius of the earth is Rc, and the circumference ratio is PI;

Then,

$$\text{double } dx = \text{distance} * \sin (\text{angle} * PI /180);$$

$$\text{double } dy = \text{distance} * \cos (\text{angle} * PI /180);$$

$$\text{double } aEc = Rj + (Rc - Rj) * (90 - latA')/90;$$

$$\text{double } aEd = aEc * \cos (latA' * PI /180);$$

$$\text{double } logX = (dx / aEd + logA' * PI /180) * 180 / PI; \text{ double } latX = (dy / aEc + latA' * PI/180) * 180/PI;$$

In an embodiment, the azimuth angle corresponding to the due North is 0 degrees, and the azimuth angle of the upper left corner B of the square is angle = LEFT_TOP_ANGLE = - 45 degrees; The azimuth angle of the lower right corner C of the square is angle = RIGHT BOTTOM ANGLE = l35 degrees.

The search region of the unknown neighbor cell is indicated by the longitude and latitude of the upper left corner and the lower right corner of the square, then the search region of the unknown neighbor cell is: the longitude and latitude of the upper left corner B which is: Left_Top_Coordinate = (logB, latB);

the longitude and latitude of the lower right corner C is: Right_Bottom_Coordinate = (logC, latC);

$$logB = \cfrac{\left\{ \cfrac{distance \times sin(-45 \times PI / 180)}{[Rj + (Rc - Rj) \times (90 - latA') / 90] \times [cos(latA' \times PI / 180)]} + logA' \times PI/180 \right\} \times 180}{PI}$$

$$latB = \cfrac{\left[ \cfrac{distance \times cos(-45 \times PI / 180)}{Rj + (Rc - Rj) * (90 - latA') / 90} + latA' \times PI/180 \right] \times 180}{PI}$$

$$logC = \cfrac{\left\{ \cfrac{distance \times sin(135 \times PI / 180)}{[Rj + (Rc - Rj) \times (90 - latA') / 90] \times [cos(latA' \times PI / 180)]} + logA' \times PI/180 \right\} \times 180}{PI}$$

$$latC = \cfrac{\left[ \cfrac{distance \times cos(135 \times PI / 180)}{Rj + (Rc - Rj) * (90 - latA') / 90} + latA' \times PI/180 \right] \times 180}{PI}$$

As a preferred embodiment of the configuration method for an unknown neighbor cell of the present application, after calculating a distance between each cell in the filtered cell set and a central point, it is also needed to sort according to a calculation result so as to obtain a sorted cell set.

In an embodiment, the PCI and frequency point of the unknown neighbor cell that are reported by the UE terminal are presented in the form of MR measurement report.

In an embodiment, adding neighbor cell information of the final neighbor cell to a neighbor cell list is automatic addition by ANR (Automatic Neighbor Relation).

In order to implement the above identification method, the present application further discloses a configuration apparatus for an unknown neighbor cell, comprising:

a receiving module 2 for receiving a PCI and a frequency point of an unknown neighbor cell that are reported by an UE terminal;

a searching module 3 for searching the entire network for every cell where both the PCI and frequency point are the same as those of the unknown neighbor cell, so as to obtain a cell set;

a determining module 4 for determining a longitude and latitude range of a search region of the unknown neighbor cell;

a filtering module 5 for filtering one or more cells from the cell set that are located in the search region of the unknown neighbor cell, so as to obtain a filtered cell set;

a screening module 6 for calculating a distance between each cell in the filtered cell set and a central point; and

a configuring module 7 for taking the cell closest to the central point as a final neighbor cell of a serving cell, and adding neighbor cell information of the final neighbor cell to a neighbor cell list.

In an embodiment, the screening module 6 comprises: a sorting sub-module 9 for sorting according to a calculation result so as to obtain a sorted cell set, and determining the cell closest to the center point; in the screening module 6, a calculating sub-module 8 is used for calculating a distance between each cell in the filtered cell set and a central point.

For the receiving module 2, in an example, the PCI and frequency point of the unknown neighbor cell that are reported by the UE terminal are presented in the form of MR measurement report.

For the determining module 4, in an example, the specific mannerd for determining a longitude and latitude range of a search region of the unknown neighbor cell comprises: determining a longitude and latitude information of the center point of a serving cell; taking the longitude and latitude of the center point as the center, drawing a contour line with a distance parameter of a search range of the unknown neighbor cell as a boundary, so as to obtain longitude and latitude information of a search region of the unknown neighbor cell.

In an example, the manner for determining the position of the central point comprises: when the serving cell has no formal neighbor cell before receiving the PCI and frequency point of the unknown neighbor cell that are reported by the UE terminal, taking the serving cell as the center point; when the serving cell has one formal neighbor cell before receiving the PCI and frequency point of the unknown neighbor cell that are reported by the UE terminal, taking a midpoint of a connecting line between the serving cell and the formal neighbor cell as the center point; when the serving cell has two formal neighbor cells before receiving the PCI and frequency point of the unknown neighbor cell that are reported by the UE terminal, taking a gravity center of a triangle formed by the serving cell and the two formal neighbor cells as the center point; when the serving cell has N formal neighbor cells before receiving the PCI and frequency point of the unknown neighbor cell that are reported by the UE terminal, N>2, selecting the two closest formal neighbor cells to the serving cell, and taking a gravity center of a triangle formed by the serving cell and the two closest formal neighbor cells as the center point.

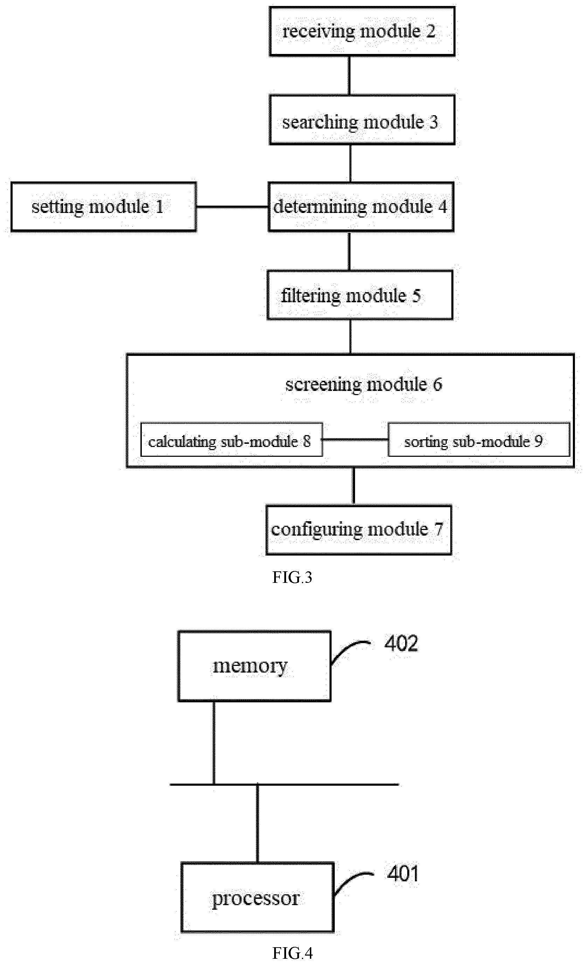

In an embodiment, the configuration apparatus for the unknown neighbor cell further comprises: a setting module 1 for setting the search region of the unknown neighbor cell; in an example, before taking the longitude and latitude of the center point as the center, drawing the contour line with a distance parameter of the search region of the unknown neighbor cell as a boundary, it is also needed to set a distance parameter of the search region of the unknown neighbor cell. As shown in Fig. 3.

In an example, the search region of the unknown neighbor cell is set based on deployment density of a base station, the distance parameter of the search region of the unknown neighbor cell is set to ensure that the serving cell can have at least one neighbor cell.

In an example, the contour line is a square contour line, and the distance parameter of the search region of the unknown neighbor cell refers to a distance from a center of the square contour line to a border.

In an example, after calculating the distance between each cell in the filtered cell set and the central point, it is also needed to sort according to a calculation result so as to obtain a sorted cell set.

For the configuring module 7, in an example, adding neighbor cell information of the final neighbor cell to a neighbor cell list is automatic addition by automatic neighbor relation ANR.

The following describes in detail the configuration method for the unknown neighbor cell disclosed by the present application through specific embodiments.

Embodiment 1

Taking the example that when the serving cell has no formal neighbor cell before receiving the PCI and frequency point of the unknown neighbor cell that are reported by the UE terminal, to introduce the configuration method for the unknown neighbor cell of the present application, the method comprises:

1. Setting the distance parameter of the search range of the unknown neighbor cell Distance = 6000 meters;

2. Receiving the PCI and the frequency point of the unknown neighbor cell reported by the UE terminal;

3. Searching the entire network for every cell where both the PCI and frequency point are the same as those of the unknown neighbor cell, so as to obtain a cell set;

Assuming that the cell set obtained in this embodiment is Nbars = {B, C, D, E, F, G, H, I, J, K};

Wherein, Cell B: Coordinate_B = (116.99941231350159, 34.297);

Cell C: Coordinate_C = (118.5421, 34.21);

Cell D: Coordinate D = (117.00143415350, 34.258615);

Cell E: Coordinate_E = (116.9231, 34.31);

Cell F: Coordinate_F = (115.9902, 34.318);

Cell G: Coordinate_G = (117.0023, 34.26);

Cell H: Coordinate_H = (116.9903, 34.29021);

Cell I: Coordinate_I = (119.82549, 30.3023544);

Cell J: Coordinate_J = (117.00154, 34.280315);

Cell K: Coordinate_K = (120.012365, 37.35862);

4. Determining the longitude and latitude range of the search region of the unknown neighbor cell;

4.1. Determining longitude and latitude information of the center point of the search region of the unknown neighborhood;

Since in this embodiment, the serving cell has no formal neighbor cell before receiving the PCI and frequency point of the unknown neighbor cell that are reported by the UE terminal, the center point is the serving cell;

Assuming that the serving cell is A, the central point is A', the longitude and latitude of the serving cell A is Coordinate_A = (logA, latA) = (116.952732, 34.264648); assuming that the longitude and latitude of the central point A' is Coordinate_Center = (logA', latA') = (116.952736, 34.264648);

4.2. Taking the longitude and latitude of the center point as the center, drawing a square with the distance parameter of 6000 meters of the search range of the unknown neighbor cell as the boundary, and the four sides of the square are parallel to the planes where the longitude line or the latitude line locate respectively, so as to obtain the longitude and latitude information of the search region of the unknown neighbor cell.

Taking the azimuth angle corresponding to the due North as 0 degrees, then the azimuth angle of the upper left corner B of the square is angle = LEFT_TOP_ANGLE = - 45 degrees; The azimuth angle of the lower right corner C of the square is angle = RIGHT BOTTOM ANGLE = l35 degrees.

Calculating with the polar radius of the earth Rj = 6356725; the equatorial radius of the earth Rc = 6378137; the circumference ratio PI = 3.1415926......,

Indicating the search region of the unknown neighbor cell by the longitude and latitude of the upper left corner and the lower right corner of the square, then the search region of the unknown neighbor cell is:

The longitude and latitude of the upper left corner B is: Left_Top_Coordinate = (logB, latB) = (116.88743481350299, 34.318615893780944);

The longitude and latitude of the lower right corner C is: Right_Bottom_Coordinate = (logC, latC) = = (117.018037186497, 34.21068010621906);

5. Filtering one or more cells from the cell set Nbars that are located in the search region of the unknown neighbor cell, so as to obtain a filtered cell set Nbars' = {B, D, E, G, H, J};

6. Calculating a distance between each cell in the filtered cell set Nbars' and a central point, and sorting them,

The distance from the center point A' to Cell B: distance A' B = 5597.587783971948

The distance from the center point A' to Cell D: distance A' D = 4525.356106002652

The distance from the center point A' to Cell E: distance A' E = 5730.983259853882

The distance from the center point A' to Cell G: distance A' G = 4584.119272531209

The distance from the center point A' to Cell H: distance A' H = 4471.215305877316

The distance from the center point A' to Cell J: distance A' J = 4810.9954745792675

The sorted cell set Nbrs" = {H, D, G, J, B, E}, therefore, the Cell H is closest to the center point;

7. Taking the Cell H as a final neighbor cell of a serving cell, and adding neighbor cell information to a neighbor cell list by automatic neighbor relation ANR.

Embodiment 2

Taking the example that when the serving cell has one formal neighbor cell before receiving the PCI and frequency point of the unknown neighbor cell that are reported by the UE terminal, to introduce the configuration method for the unknown neighbor cell of the present application, the method comprises:

1. Setting the distance parameter of the search range of the unknown neighbor cell Distance = 6000 meters;

2. Receiving the PCI and the frequency point of the unknown neighbor cell reported by the UE terminal;

3. Searching the entire network for every cell where both the PCI and frequency point are the same as those of the unknown neighbor cell, so as to obtain a cell set;

Assuming that the cell set obtained in this embodiment is Nbars = {B, C, D, E, F, G, H, I, J, K};

Wherein, Cell B: Coordinate_B = (116.99941231350159, 34.297);

Cell C: Coordinate_C = (118.5421, 34.21);

Cell D: Coordinate D = (117.00143415350, 34.258615);

Cell E: Coordinate_E = (116.9231, 34.31);

Cell F: Coordinate_F = (115.9902, 34.318);

Cell G: Coordinate_G = (117.0023, 34.26);

Cell H: Coordinate_H = (116.9903, 34.29021);

Cell I: Coordinate_I = (119.82549, 30.3023544);

Cell J: Coordinate_J = (117.00154, 34.280315);

Cell K: Coordinate_K = (120.012365, 37.35862);

4. Determining the longitude and latitude range of the search region of the unknown neighbor cell;

4.1. Determining longitude and latitude information of the center point of the search region of the unknown neighborhood;

Since in this embodiment, the serving cell has one formal neighbor cell before receiving the PCI and frequency point of the unknown neighbor cell that are reported by the UE terminal, the center point is the midpoint of the connecting line between the serving cell and the formal neighbor cell;

Assuming that the serving cell is A, the central point is A', and the normal neighbor cell is A1, the longitude and latitude of the serving cell A is Coordinate_A = (logA, latA) = (116.952732, 34.264648); the longitude and latitude of the formal neighbor cell A1 is Coordinate_A1 = (logA1, latA1) = (116.952740, 34.264648); then the longitude and latitude of the central point A' is Coordinate_Center = (logA', latA') = ((logA+logA1) /2, (latA+latA1) /2) = (116.952736, 34.264648);

4.2. Taking the longitude and latitude of the center point as the center, drawing a square with the distance parameter of 6000 meters of the search range of the unknown neighbor cell as the boundary, and the four sides of the square are parallel to the planes where the longitude line or the latitude line locate respectively, so as to obtain the longitude and latitude information of the search region of the unknown neighbor cell.

Taking the azimuth angle corresponding to the due North as 0 degrees, then the azimuth angle of the upper left corner B of the square is angle = LEFT_TOP_ANGLE = - 45 degrees; The azimuth angle of the lower right corner C of the square is angle = RIGHT BOTTOM ANGLE = l35 degrees.

Calculating with the polar radius of the earth Rj = 6356725; the equatorial radius of the earth Rc = 6378137; the circumference ratio PI = 3.1415926......,

Indicating the search region of the unknown neighbor cell by the longitude and latitude of the upper left corner and the lower right corner of the square, then the search region of the unknown neighbor cell is:

The longitude and latitude of the upper left corner B is: Left_Top_Coordinate = (logB, latB) = (116.88743481350299, 34.318615893780944);

The longitude and latitude of the lower right corner C is: Right_Bottom_Coordinate = (logC, latC) = = (117.018037186497, 34.21068010621906);

5. Filtering one or more cells from the cell set Nbars that are located in the search region of the unknown neighbor cell, so as to obtain a filtered cell set Nbars' = {B, D, E, G, H, J};

6. Calculating a distance between each cell in the filtered cell set Nbars' and a central point, and sorting them,

The distance from the center point A' to Cell B: distance A' B = 5597.587783971948

The distance from the center point A' to Cell D: distance A' D = 4525.356106002652

The distance from the center point A' to Cell E: distance A' E = 5730.983259853882

The distance from the center point A' to Cell G: distance A' G = 4584.119272531209

The distance from the center point A' to Cell H: distance A' H = 4471.215305877316

The distance from the center point A' to Cell J: distance A' J = 4810.9954745792675

The sorted cell set Nbrs"= {H, D, G, J, B, E}, therefore, the Cell H is closest to the center point;

7. Taking the Cell H as a final neighbor cell of a serving cell, and adding neighbor cell information to a neighbor cell list by automatic neighbor relation ANR.

Embodiment 3

Taking the example that when the serving cell has two formal neighbor cells before receiving the PCI and frequency point of the unknown neighbor cell that are reported by the UE terminal, to introduce the configuration method for the unknown neighbor cell of the present application including, the method comprises:

1. Setting the distance parameter of the search range of the unknown neighbor cell Distance = 6000 meters;

2. Receiving the PCI and the frequency point of the unknown neighbor cell reported by the UE terminal;

3. Searching the entire network for every cell where both the PCI and frequency point are the same as those of the unknown neighbor cell, so as to obtain a cell set;

Assuming that the cell set obtained in this embodiment is Nbars = {B, C, D, E, F, G, H, I, J, K};

Wherein, Cell B: Coordinate_B = (116.99941231350159, 34.297);

Cell C: Coordinate_C = (118.5421, 34.21);

Cell D: Coordinate D = (117.00143415350, 34.258615);

Cell E: Coordinate_E = (116.9231, 34.31);

Cell F: Coordinate_F = (115.9902, 34.318);

Cell G: Coordinate_G = (117.0023, 34.26);

Cell H: Coordinate_H = (116.9903, 34.29021);

Cell I: Coordinate_I = (119.82549, 30.3023544);

Cell J: Coordinate_J = (117.00154, 34.280315);

Cell K: Coordinate_K = (120.012365, 37.35862);

4. Determining the longitude and latitude range of the search region of the unknown neighbor cell;

4.1. Determining the longitude and latitude information of the center point of the search region of the unknown neighborhood;

Since in this embodiment, the serving cell has two formal neighbor cells before receiving the PCI and frequency point of the unknown neighbor cell that are reported by the UE terminal, the center point is the gravity center of the triangle formed by the serving cell and the two formal neighbor cells;

Assuming that the serving cell is A, the central point is A', and the two formal neighbor cells are A1 and A2 respectively, the longitude and latitude of the serving cell A is Coordinate_A = (logA, latA) = (116.952732, 34.264648); the longitude and latitude of the formal neighbor cell A1 is Coordinate_A1 = (logA1, latA1) = (116.952740, 34.264660); the longitude and latitude of the formal neighbor cell A2 is Coordinate_A2 = (logA2, latA2) = (116.952736, 34.264636); the longitude and latitude of the central point A' is Coordinate_Center = (logA', latA') = ((logA+logA1+logA2)/3, (latA+latA1+ latA2) /3) = (116.952736, 34.264648);

4.2. Taking the longitude and latitude of the center point as the center, drawing a square with the distance parameter of 6000 meters of the search range of the unknown neighbor cell as the boundary, and the four sides of the square are parallel to the planes where the longitude line or the latitude line locate respectively, so as to obtain the longitude and latitude information of the search region of the unknown neighbor cell.

Taking the azimuth angle corresponding to the due North as 0 degrees, then the azimuth angle of the upper left corner B of the square is angle = LEFT_TOP_ANGLE = - 45 degrees; The azimuth angle of the lower right corner C of the square is angle = RIGHT BOTTOM ANGLE = l35 degrees.

Calculating with the polar radius of the earth Rj = 6356725; the equatorial radius of the earth Rc = 6378137; the circumference ratio PI = 3.1415926......,

Indicating the search region of the unknown neighbor cell by the longitude and latitude of the upper left corner and the lower right corner of the square, then the search region of the unknown neighbor cell is:

The longitude and latitude of the upper left corner B is: Left_Top_Coordinate = (logB, latB) = (116.88743481350299, 34.318615893780944);

The longitude and latitude of the lower right corner C is: Right_Bottom_Coordinate = (logC, latC) = = (117.018037186497, 34.21068010621906);

5. Filtering one or more cells from the cell set Nbars that are located in the search region of the unknown neighbor cell, so as to obtain a filtered cell set Nbars' = {B, D, E, G, H, J};

6. Calculating a distance between each cell in the filtered cell set Nbars' and a central point, and sorting them,

The distance from the center point A' to Cell B: distance A' B = 5597.587783971948

The distance from the center point A' to Cell D: distance A' D = 4525.356106002652

The distance from the center point A' to Cell E: distance A' E = 5730.983259853882

The distance from the center point A' to Cell G: distance A' G = 4584.119272531209

The distance from the center point A' to Cell H: distance A' H = 4471.215305877316

The distance from the center point A' to Cell J: distance A' J = 4810.9954745792675

The sorted cell set Nbrs"= {H, D, G, J, B, E}, therefore, the Cell H is closest to the center point;

7. Taking the Cell H as a final neighbor cell of a serving cell, and adding neighbor cell information to a neighbor cell list by automatic neighbor relation ANR.

Embodiment 4

Taking the example that when the serving cell has N formal neighbor cell before receiving the PCI and frequency point of the unknown neighbor cell that are reported by the UE terminal, N>2, to introduce the configuration method for the unknown neighbor cell of the present application including, the methoid comprises:

1. Setting the distance parameter of the search range of the unknown neighbor cell Distance = 6000 meters;

2. Receiving the PCI and the frequency point of the unknown neighbor cell reported by the UE terminal;

3. Searching the entire network for every cell where both the PCI and frequency point are the same as those of the unknown neighbor cell, so as to obtain a cell set;

Assuming that the cell set obtained in this embodiment is Nbars = {B, C, D, E, F, G, H, I, J, K};

Wherein, Cell B: Coordinate_B = (116.99941231350159, 34.297);

Cell C: Coordinate_C = (118.5421, 34.21);

Cell D: Coordinate D = (117.00143415350, 34.258615);

Cell E: Coordinate_E = (116.9231, 34.31);

Cell F: Coordinate F = (115.9902, 34.318);

Cell G: Coordinate_G = (117.0023, 34.26);

Cell H: Coordinate_H = (116.9903, 34.29021);

Cell I: Coordinate_I = (119.82549, 30.3023544);

Cell J: Coordinate_J = (117.00154, 34.280315);

Cell K: Coordinate_K = (120.012365, 37.35862);

4. Determining the longitude and latitude range of the search region of the unknown neighbor cell;

4.1. Determining the longitude and latitude information of the center point of the search region of the unknown neighborhood;

Since in this embodiment, the serving cell has more than two formal neighbor cells before receiving the PCI and frequency point of the unknown neighbor cell that are reported by the UE terminal, therefore, it is needed to find the two closest formal neighbor cells by calculating the distance between the serving cell and its formal neighbor cells;

Assuming that the serving cell is A, the central point is A', and the two closest formal neighbor cells are A1 and A2 respectively, the longitude and latitude of the serving cell A is Coordinate_A = (logA, latA) = (116.952732, 34.264648); the longitude and latitude of the closest formal neighbor cell A1 is Coordinate_A1 = (logA1, latA1) = (116.952740, 34.264660); the longitude and latitude of the closest formal neighbor cell A2 is Coordinate_A2 = (logA2, latA2) = (116.952736, 34.264636); then the longitude and latitude of the central point A' is Coordinate_Center = (logA', latA') = ((logA+logA1+logA2)/3, (latA+latA1+ latA2) /3) = (116.952736, 34.264648);

4.2. Taking the longitude and latitude of the center point as the center, drawing a square with the distance parameter of 6000 meters of the search range of the unknown neighbor cell as the boundary, and the four sides of the square are parallel to the planes where the longitude line or the latitude line locate respectively, so as to obtain the longitude and latitude information of the search region of the unknown neighbor cell.

Taking the azimuth angle corresponding to the due North as 0 degrees, then the azimuth angle of the upper left corner B of the square is angle = LEFT_TOP_ANGLE = - 45 degrees; The azimuth angle of the lower right corner C of the square is angle = RIGHT BOTTOM ANGLE = l35 degrees.

Calculating with the polar radius of the earth $Rj = 6356725$; the equatorial radius of the earth $Rc = 6378137$; the circumference ratio $PI = 3.1415926......$,

Indicating the search region of the unknown neighbor cell by the longitude and latitude of the upper left corner and the lower right corner of the square, then the search region of the unknown neighbor cell is:

The longitude and latitude of the upper left corner B is: Left_Top_Coordinate = (logB, latB) = (116.88743481350299, 34.318615893780944);

The longitude and latitude of the lower right corner C is: Right_Bottom_Coordinate = (logC, latC) = = (117.018037186497, 34.21068010621906);

5. Filtering one or more cells from the cell set Nbars that are located in the search region of the unknown neighbor cell, so as to obtain a filtered cell set Nbars' = {B, D, E, G, H, J};

6. Calculating a distance between each cell in the filtered cell set Nbars' and a central point, and sorting them,

The distance from the center point A' to Cell B: distance A' B = 5597.587783971948

The distance from the center point A' to Cell D: distance A' D = 4525.356106002652

The distance from the center point A' to Cell E: distance A' E = 5730.983259853882

The distance from the center point A' to Cell G: distance A' G = 4584.119272531209

The distance from the center point A' to Cell H: distance A' H = 4471.215305877316

The distance from the center point A' to Cell J: distance A' J = 4810.9954745792675

The sorted cell set Nbrs"= {H, D, G, J, B, E}, therefore, the Cell H is closest to the center point;

7. Taking the Cell H as a final neighbor cell of a serving cell, and adding neighbor cell information to a neighbor cell list by automatic neighbor relation ANR.

An embodiment of the present application relates to an electronic device, as shown in Fig. 4, comprising: at least one processor 401; and a memory 402 in communication with the at least one processor 401; wherein, the memory 402 stores instructions executable by the at least one processor 401, the instructions, when executed by the at least one processor 401, enable the at least one processor 401 to implement the configuration method for an unknown neighbor cell as described above.

Wherein the memory and processor are connected in a bus mode. The bus can include any number of interconnected buses and bridges. The bus connects various circuits of one or more processors and memories. The bus can also connect various other circuits such as peripheral devices, voltage regulators, power management circuits, etc., which are well known in the art. Therefore, it will not be further described herein. The bus interface provides an interface between the bus and a transceiver. The transceiver may be one element or a plurality of elements, such as a plurality of receivers and transmitters, providing a unit for communicating with various other apparatus on a transmission medium. The data processed by the processor is transmitted on the wireless medium through the antenna, and furthermore, the antenna also receives the data and transmits the data to the processor.

The processor is responsible for managing the bus and general processing, and may also provide various functions, including timing, peripheral interfacing, voltage regulating, power managing, and other control functions. The memory may be used to store data used by the processor in performing operations.

An embodiment of the present application relates to a computer-readable storage medium having stored thereon a computer program to be executed by a processor, the configuration method for an unknown neighbor cell as described above is implemented when the computer program is executed by the processor. The computer-readable storage medium includes transient or non-transient, removable or non-removable media implemented in any method or technology for storing information (such as computer-readable instructions, data structures, computer program modules or other data).

That is, those skilled in the art can understand that the implementation of all or part of the steps in the method of the above embodiments can be completed by instructing the relevant hardware through a program, which is stored in a storage medium, and includes several instructions to enable a device (such as a single-chip computer, a chip, etc.) or a processor to perform all or part of the steps of the method in each embodiment of the present application. The aforementioned storage media includes: USB, mobile hard disk, read only memory (ROM), random access memory (RAM), magnetic disc or optical disc and other media that can store program codes.

Those ordinary skilled in the art can understand that the above embodiments are specific embodiments to implement the present application, and in practical applications, various changes can be made to them in form and detail without departing from the spirit and scope of the present application.

The above described embodiments are only preferred embodiments of the present application, and are not an exhaustive list of feasible implementations of the present application. For those ordinary skilled in the art, any obvious changes made to the present application without departing from the principle and spirit of the present application shall be deemed to be included in the scope of protection of the claims of the present application.

**Claims**

1. A configuration method for an unknown neighbor cell, comprising:

   receiving a physical cell identifier PCI and a frequency point of an unknown neighbor cell that are reported by a user equipment UE terminal;
   searching the entire network for every cell where both the PCI and frequency point are the same as those of the unknown neighbor cell, so as to obtain a cell set;
   determining a longitude and latitude range of a search region of the unknown neighbor cell;
   filtering one or more cells from the cell set that are located in the search region of the unknown neighbor cell, so as to obtain a filtered cell set;
   calculating a distance between each cell in the filtered cell set and a central point; and
   taking the cell closest to the central point as a final neighbor cell of a serving cell, and adding neighbor cell information of the final neighbor cell to a neighbor cell list.

2. The configuration method for an unknown neighbor cell of claim 1, wherein a specific manner for determining a longitude and latitude range of a search region of the unknown neighbor cell comprises:

   determining a longitude and latitude information of the center point of a serving cell;
   taking the longitude and latitude of the center point as the center, drawing a contour line with a distance parameter of a search range of the unknown neighbor cell as a boundary, so as to obtain longitude and latitude information of a search region of the unknown neighbor cell.

3. The configuration method for an unknown neighbor cell of claim 2, wherein the manner for determining the position of the central point comprises:

   when the serving cell has no formal neighbor cell before receiving the PCI and frequency point of the unknown neighbor cell that are reported by the UE terminal, taking the serving cell as the center point;

when the serving cell has one formal neighbor cell before receiving the PCI and frequency point of the unknown neighbor cell that are reported by the UE terminal, taking a midpoint of a connecting line between the serving cell and the formal neighbor cell as the center point;

when the serving cell has two formal neighbor cells before receiving the PCI and frequency point of the unknown neighbor cell that are reported by the UE terminal, taking a gravity center of a triangle formed by the serving cell and the two formal neighbor cells as the center point;

when the serving cell has N formal neighbor cells before receiving the PCI and frequency point of the unknown neighbor cell that are reported by the UE terminal, N>2, selecting the two closest formal neighbor cells to the serving cell, and taking a gravity center of a triangle formed by the serving cell and the two closest formal neighbor cells as the center point.

4. The configuration method for an unknown neighbor cell of claim 2, wherein before taking the longitude and latitude of the center point as the center, drawing the contour line with a distance parameter of a search range of the unknown neighbor cell as a boundary, it is also needed to set a distance parameter of a search range of the unknown neighbor cell.

5. The configuration method for an unknown neighbor cell of claim 2, wherein a search range of the unknown neighbor cell is set based on deployment density of a base station, the distance parameter of the search region of the unknown neighbor cell is set to ensure that the serving cell can have at least one neighbor cell.

6. The configuration method for an unknown neighbor cell of claim 2, wherein the contour line is a square contour line, and the distance parameter of the search region of the unknown neighbor cell refers to a distance from a center of the square contour line to a border.

7. The configuration method for an unknown neighbor cell of any one of claims 1-6, wherein after calculating a distance between each cell in the filtered cell set and a central point, it is also needed to sort according to a calculation result so as to obtain a sorted cell set.

8. The configuration method for an unknown neighbor cell of any one of claims 1-7, wherein the PCI and frequency point of the unknown neighbor cell that are reported by the UE terminal are presented in the form of MR measurement report.

9. The configuration method for an unknown neighbor cell of any one of claims 1-8, wherein adding neighbor cell information of the final neighbor cell to a neighbor cell list is automatic addition by automatic neighbor relation ANR.

10. A configuration apparatus for an unknown neighbor cell, comprising:

a receiving module for receiving a physical cell identifier PCI and a frequency point of an unknown neighbor cell that are reported by a user equipment UE terminal;

a searching module for searching the entire network for every cell where both the PCI and frequency point are the same as those of the unknown neighbor cell, so as to obtain a cell set;

a determining module for determining a longitude and latitude range of a search region of the unknown neighbor cell;

a filtering module for filtering one or more cells from the cell set that are located in the search region of the unknown neighbor cell, so as to obtain a filtered cell set;

a screening module for calculating a distance between each cell in the filtered cell set and a central point; and

a configuring module for taking the cell closest to the central point as a final neighbor cell of a serving cell, and adding neighbor cell information of the final neighbor cell to a neighbor cell list.

11. The configuration apparatus for an unknown neighbor cell of claim 10, wherein the screening module further comprises: a sorting sub-module for sorting according to a calculation result so as to obtain a sorted cell set, and determining the cell closest to the center point.

12. An electronic device, comprising:

at least one processor; and

a memory in communication with the at least one processor; wherein,

the memory stores instructions executable by the at least one processor, the instructions, when executed by the at least one processor, enable the at least one processor to implement the configuration method for an unknown neighbor cell of any one of claims 1 to 9.

13. A computer-readable storage medium having stored thereon a computer program to be executed by a processor, the configuration method for an unknown neighbor cell of any one of claims 1 to 9 is implemented when the computer program is executed by the processor.

```
                    ┌─────────────┐
                    │    Start    │
                    └──────┬──────┘
                           │
                           ▼
┌──────────────────┐   ┌──────────────────┐   ┌──────────────────┐
│ Receive a PCI    │   │ Obtain, bymeans  │   │ Determine a      │
│ and a            │   │ of filtering and │   │ longitude and    │
│ frequency point  │   │ from cells in    │   │ latitude range   │
│ of an unknown    │──▶│ the entire       │──▶│ of 'a search     │
│ neighbor cell    │   │ network, a cell  │   │ range of the     │
│ that are         │   │ set Ubars that   │   │ unknown neighbor │
│ reported by a    │   │ satisfies the    │   │ cell' of a       │
│ UE terminal      │   │ PCI and the      │   │ serving cell     │
└──────────────────┘   │ frequency point  │   └────────┬─────────┘
                       └──────────────────┘            │
                                                        │
                                                        ▼
┌──────────────────┐   ┌──────────────────┐   ┌──────────────────┐
│ Select the cell  │   │ Calculate a      │   │ Obtain, by means │
│ with the         │   │ distance between │   │ of filtering and │
│ shortest sorted  │◀──│ each cell in the │◀──│ from the cell    │
│ distance as a    │   │ cell set Ubars'  │   │ set Ubars, a     │
│ neighbor cell of │   │ and a central    │   │ cell set Ubars'  │
│ the serving cell │   │ point, and sort  │   │ that satisfies   │
│                  │   │ the same         │   │ the longitud and │
└──────────────────┘   └──────────────────┘   │ latitude range   │
                                               └──────────────────┘
```

FIG.1

north

upper left corner B

Distance

central point A'

lower right corner C

FIG.2

receiving module 2

searching module 3

setting module 1 — determining module 4

filtering module 5

screening module 6

calculating sub-module 8 — sorting sub-module 9

configuring module 7

FIG.3

memory 402

processor 401

FIG.4

## INTERNATIONAL SEARCH REPORT

| International application No. |
| --- |
| **PCT/CN2021/112633** |

**A.    CLASSIFICATION OF SUBJECT MATTER**

H04W 16/18(2009.01)i

According to International Patent Classification (IPC) or to both national classification and IPC

**B.    FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNPAT, WPI, EPODOC, 3GPP, CNKI, IEEE: 邻区, 相邻小区, 发现, 确定, 频点, 经纬度, 距离, 地理位置, PCI, adjacent, neighbor+, cell, discover+, frequency point, longitude, latitude, distance, geographical position

**C.    DOCUMENTS CONSIDERED TO BE RELEVANT**

| Category* | Citation of document, with indication, where appropriate, of the relevant passages | Relevant to claim No. |
| --- | --- | --- |
| X | CN 110876161 A (ZTE CORPORATION) 10 March 2020 (2020-03-10) description paragraphs 0032-0094 | 1-13 |
| A | CN 104581778 A (ZHUHAI DINGLI COMMUNICATIONS CO., LTD.) 29 April 2015 (2015-04-29) entire document | 1-13 |
| A | CN 103067867 A (ZTE CORPORATION) 24 April 2013 (2013-04-24) entire document | 1-13 |
| A | CN 108012280 A (CHINA TELECOM GLOBAL LIMITED) 08 May 2018 (2018-05-08) entire document | 1-13 |
| A | CN 103281722 A (DATANG MOBILE COMMUNICATIONS EQUIPMENT CO., LTD.) 04 September 2013 (2013-09-04) entire document | 1-13 |
| A | EP 3598789 A1 (ZTE CORPORATION) 22 January 2020 (2020-01-22) entire document | 1-13 |

☐ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **26 October 2021** | **25 January 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/112633**

| Patent document cited in search report | | | Publication date (day/month/year) | Patent family member(s) | | | Publication date (day/month/year) |
|---|---|---|---|---|---|---|---|
| CN | 110876161 | A | 10 March 2020 | WO | 2020043189 | A1 | 05 March 2020 |
| CN | 104581778 | A | 29 April 2015 | | None | | |
| CN | 103067867 | A | 24 April 2013 | WO | 2013060141 | A1 | 02 May 2013 |
| CN | 108012280 | A | 08 May 2018 | | None | | |
| CN | 103281722 | A | 04 September 2013 | | None | | |
| EP | 3598789 | A1 | 22 January 2020 | WO | 2018166285 | A1 | 20 September 2018 |
| | | | | CN | 108632845 | A | 09 October 2018 |
| | | | | JP | 2020510359 | A | 02 April 2020 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202011008211